# EUROPEAN PATENT APPLICATION

(11) **EP 4 817 946 A1**
(43) Date of publication of application: **07.10.2026**
(21) Application number: 25168170.6
(22) Date of filing: 03.04.2025
(51) Int. Cl.: B60L 58/12, G06N 7/01, G06F 17/18

(54) **METHOD AND APPARATUS FOR DETERMINING AN ESTIMATED REMAINING DRIVING RANGE OF AN ELECTRIC VEHICLE**

(71) Applicant: Hyundai Motor Company, Seoul 06797 (KR); Kia Corporation, Seoul 06797 (KR)
(72) Inventor: Antaloae, Ciprian, 65428 Ruesselsheim (DE); Boschmann, Viktor, 65428 Ruesselsheim (DE); Schrott, Michael, 65428 Ruesselsheim (DE); Behlivan, Kerem, 65428 Ruesselsheim (DE); Mohs, Ernst, 65428 Ruesselsheim (DE); Martinez Nunez, David, 65428 Ruesselsheim (DE); Vanegas Maldonado, Yana Catalina, 65428 Ruesselsheim (DE); Zlojo, Harun, 65428 Ruesselsheim (DE); Hoffmann, Stefan, 65428 Ruesselsheim (DE); Unterberger, Bastian, 65428 Ruesselsheim (DE)
(74) Representative: Isarpatent

(57) **Abstract**

Provided is a method and an apparatus for determining an estimated remaining driving range of an electric vehicle. The method (200) comprises determining (210), by using at least one computational model, a plurality of remaining driving range predictions, each of the plurality of remaining driving range predictions being based on a corresponding time window of driving history of the vehicle. Further, the method comprises determining (220) characteristic parameters of a probability distribution function formed at least approximately by the plurality of remaining driving range predictions. The method further comprises determining (230) at least one estimated remaining driving range of the vehicle and a corresponding confidence level based on the characteristic parameters of the probability distribution function. Further, the method comprises outputting (240) the at least one estimated remaining driving range of the vehicle and the corresponding confidence level.

## Description

### Technical field

The present invention relates to a method for determining an estimated remaining driving range of an electric vehicle. Further, the present invention relates to an apparatus for determining an estimated remaining driving range of an electric vehicle. In addition, the present invention relates to a corresponding computer program, a corresponding computer-readable medium, and a motor vehicle.

### Background

In an electric vehicle, the remaining driving range of the vehicle is a key information for an operator, e.g. driver etc., of the vehicle, thereby indicating the remaining and/or maximum driving range of the vehicle using power from its on-board battery. For example, the remaining driving range of the vehicle may be displayed on an instrument cluster of the vehicle to inform e.g. the driver of the vehicle. This information may be used, for example, to drive to a charging station in good time to recharge the vehicle battery.

The remaining driving range of the vehicle may be estimated, which estimation may be difficult in calculation, especially for changing driving scenarios, for different driving styles, or for different ambient or different environmental conditions.

Document US 2020/0055525 A1 describes fuel consumption-based driving behavior scoring. Driving data may be obtained during operation of a vehicle. Based on braking data, a braking event during a first time period may be identified, wherein the braking event exceeds a braking threshold. Based on the braking event, first coached driving data may be generated. Based on the first coached driving data, first fuel savings may be determined. Based on acceleration data, an acceleration event during a second time period may be identified, wherein the acceleration event exceeds an acceleration threshold. Based on the acceleration event, second coached driving data may be generated. Based on the second coached driving data, second fuel savings may be determined. Based on the first and second fuel savings, a total fuel savings may be determined, and a driving behavior score may be generated.

Document US 2016/0061610 A1 describes an electric vehicle, in which a processor is configured to present a vehicle driving range on a display. The vehicle driving range is based on a known vehicle route including at least one route segment, an estimated energy usage for the route segment, an available battery charge, and stored energy consumption data from previous drive cycles.

Document US 2019/0179980 A1 describes determining a predicted energy usage of a vehicle. This includes collecting sensor data relating to a first vehicle and determining a route taken by the first vehicle based on the collected sensor data.

Document US 2020/0011687 A1 describes tracking energy usage in a vehicle. This involves building an energy usage prediction model, obtaining a planned route for a vehicle that contains planned route segments, applying the energy usage prediction model to each planned route segment to obtain an energy usage plan, receiving onboard data from the vehicle, constructing an actual route based on the onboard data, and performing a match analysis between the planned route and the actual route based on the onboard data.

Document US 2022/0176939 A1 describes for an electrified vehicle receiving trip data from an external server, the trip data including a plurality of road segments of a selected route from a starting location to a destination, each road segment having an associated energy consumption and distance, calculating a distance-to-empty (DTE) based on a remaining trip distance to the destination, available energy of the traction battery, an estimated traction battery energy required for the remaining trip distance, and an overall vehicle efficiency, the estimated traction bakery energy being based on a combination of the received segment energy consumption and distance of each remaining segment in the trip, and communicating the DTE to a display within the electrified vehicle to reduce fluctuations in displayed DTE during travel along routes with nonlinear energy consumption (changing energy efficiency).

### Disclosure of the invention

An object of the invention is to provide an at least more informative estimation of the remaining driving range of an electric vehicle.

This object is solved by the subject-matter of the appended independent claims. Further embodiments are set out in the appended dependent claims and in the description below.

According to a first aspect, there is provided a method for determining an estimated remaining driving range of an electric vehicle. The method is performed during operation of the vehicle. The method comprises determining, by using at least one computational model, a plurality of remaining driving range predictions, each of the plurality of remaining driving range predictions being based on a corresponding time window of driving history of the vehicle. The method further comprises determining characteristic parameters of a probability distribution function formed at least approximately by the plurality of remaining driving range predictions. The method further comprises determining at least one estimated remaining driving range of the vehicle and a corresponding confidence level based on the characteristic parameters of the probability distribution function. The method further comprises outputting the at least one estimated remaining driving range of the vehicle and the corresponding confidence level.

The method disclosed herein allows for providing an estimated remaining driving range of the vehicle together with an associated confidence level, thereby providing the additional information of the confidence level. For example, the remaining driving range estimation may be indicated and/or presented in kilometers (km) or miles (mi) and the associated confidence level may be indicated and/or presented in e.g. percentage (0-100 %). The method allows for providing the driver with a more accurate, transparent and/or realistic information of the remaining driving range of the vehicle. By way of example, the method may be integrated with the vehicle's navigation and/or route planning to let the vehicle's operator, e.g. the driver, decide how conservative the rout planning should be. The method may use, for example, a broad base of information in its calculation, such as a driving style, recorded driving cycles, operating conditions, etc. In addition, each of these factors may be vehicle-specific and/or environment-specific, hence the function operation may be strictly linked to the individual usage of the vehicle. Further, the method may allow for giving the vehicle's operator a more detailed and realistic view of how the remaining driving range is estimated, by presenting the information with the associated confidence level. This aspect contributes also to the "education" and "awareness" of the vehicle's operator, that the remaining driving range estimation is not an exact science, as well as an increased confidence that the vehicle manufacturer is doing more to address the topic.

It is understood that the term "electric vehicle" or another similar term as used herein is inclusive of motor vehicles in general such as passenger automobiles including sports utility vehicles (SUV), buses, trucks, various commercial vehicles, and the like, and includes electric vehicles, such as battery electric vehicles (BEV), plug-in hybrid electric vehicles (PHEV), hydrogen-powered vehicles and other alternative fuel vehicles (e.g., fuels derived from resources other than petroleum).

For example, the method may be performed by using on-board and/or in-vehicle processing circuitry of the vehicle. The processing circuitry may comprise at least one of a CPU, or another general-purpose processor, a digital signal processor (DSP), a graphics processing unit (GPU), an ASIC, an FPGA or another programmable logic device, a discrete gate or transistor logic device, a discrete hardware component, or the like. The general-purpose processor may be a microprocessor, any conventional processor, or the like.

Further, as used herein, the remaining driving range may refer to any indication of the remaining driving range of the vehicle. One, non-limiting example is the so-called all-electric range (AER), which may be understood as the maximum driving range of an electric vehicle using only power from its own on-board battery. The AER may refer to traversing a given driving cycle. For a plug-in hybrid electric vehicle (PHEV), the remaining driving range may mean the maximum driving range in charge-depleting mode. In the example of AER, each of the plurality of remaining driving range predictions may be indicative for or may be an AER prediction. It is noted that the plurality of remaining driving range predictions may also be expressed as n remaining driving range predictions and, for example, as n AER (value) predictions, with n being an integer greater than 1.

As mentioned above, the remaining driving range estimation may be indicated and/or presented, for example, in kilometers (km) or miles (mi). The associated confidence level may be indicated and/or presented, for example, in e.g. percentage (0-100 %). These indications and/or presentations are, however, not limited herein.

As used herein, the time window of driving history of the vehicle may be understood as historic operating data of the vehicle in a considered time window, which reaches back into the past from a current point in time and/or a current time step for a certain, respective period of time. For example, the respective time window of driving history may comprise or may cover anything from seconds, minutes, hours, days, months, years, and/or a full driving history of the vehicle. By way of example, the time window of driving history anything from 1 min driving history, to 5 or 10 min, to 1h, 100h, full history etc. Therefore, each remaining driving range prediction may capture a different "picture" and "dynamic" of the factors that affect the remaining driving range prediction calculation. It is noted that the plurality of remaining driving range predictions may be determined, e.g. calculated, simultaneously, e.g. at a current time step.

It is noted that, as used herein, it may be assumed that the plurality of remaining driving range predictions form, create, generate, or the like at least approximately a probability distribution which is normal, based on the central limit theorem (CLT). In other words, according to the central limit theorem (CLT), the distribution of a normalized version of a sample mean converges to a standard normal distribution. That is, with a sufficiently large number of remaining driving range predictions these may be assumed to form a normal probability distribution. It is noted that the method does not necessarily require actually forming a normal probability distribution. Merely by way of example, the number of remaining driving range predictions may be greater than 10, 20, 30, etc., where tests have shown that a meaningful and/or realistic range may be in the range of approx. 20 to 100 remaining driving range predictions, or more. In this regard, the number of remaining driving range predictions determined may be selected depending on e.g. computational capability.

Further, as used herein, the at least one computational model may be made available, e.g. may be stored, in an on-board or in-vehicle data source. The at least one computational model may be firstly derived from a server, cloud server, or the like, for example, by transferring the at least one computational model from the server, etc. to the vehicle. The transfer may be implemented via over-the-air update (OTA) or the like. It is noted that the at least one computational model may be trained and/or retrained by driving data, data recordings, etc. provided by the vehicle back to the server, cloud server, etc.

Further, by way of example, the method may start at vehicle start. Thereby, the method may start the process of determining the plurality of remaining driving range predictions. The method may further comprise starting logging continuously driving data into an in-vehicle data source, such as a database. When needed, the method may further comprise sending a scheduled request for the at least one computational model to be retrained on a server, cloud server, or the like. Merely by way of example, the retraining may be performed after a time period, e.g. after or every three months, or the like. At vehicle key off, if there is a pending request to retrain the at least one computational model, the vehicle's operator may be prompted for approval followed by a server request to transfer the pre-recorded driving data from the vehicle to the server, e.g. from the last three months, wherein the server may retrain the at least one computational model using this data. Then, the retrained, i.e. updated at least one computational model may be sent back from the server to the vehicle, e.g. via over-the-air update (OTA) or the like.

As used herein, the at least one estimated remaining driving range of the vehicle and the corresponding and/or associated confidence level may be output in different ways. For example, both may be output to show one single estimated remaining driving range and the corresponding confidence level. In another example, multiple estimated remaining driving ranges and the corresponding confidence levels may be output. Also, the vehicle's operator may select a single default confidence level, e.g. 90 %. In yet another example, the vehicle's operator, e.g. driver, may ask for the confidence level, which may be indicated in percentage (%) for a given minimum remaining driving range. In another example, a single most-probable value for the remaining driving range can be shown, where this value is the mean of the probability distribution. By way of example, the estimated remaining driving range and the corresponding confidence level may be output to be presented, i.e. shown and/or displayed, to the driver of the vehicle via an instrument cluster of the vehicle and/or to be used for e.g. navigation or route planning of the vehicle.

According to an embodiment, the time windows of driving history of the vehicle of the plurality of remaining driving range predictions may differ from each other in terms of reaching back into the past for a respective period of time from a current time step. For example, a first prediction of the plurality of remaining driving range predictions may be based on a first time window of e.g. 1 min driving history. A second prediction of the plurality of remaining driving range predictions may be based on a second time window of e.g. 10 min driving history. A third prediction of the plurality of remaining driving range predictions may be based on a third time window of e.g. 1 h driving history, etc. In this way, each remaining driving range prediction may capture a different "picture" and "dynamic" of the factors that affect the remaining driving range prediction calculation.

In an embodiment, the driving history of the vehicle in the respective time window of driving history may be indicative for historic vehicle operating data comprising at least one of a driving style of the vehicle, a driving cycle of the vehicle, an environment of the vehicle, and an ageing profile of a battery of the vehicle. These factors may affect the determination, e.g. calculation, of the remaining driving range prediction(s). For example, the driving style may comprise an eco driving style, a normal driving style, and a sporty driving style, or the like. The driving cycle may comprise driving on a highway, in an urban scenario, on country roads, or the like. The environment of the vehicle may comprise weather data and/or weather conditions outside the vehicle, wherein cold and heat may cause extra energy consumption for heating, air conditioning or the like. The ageing profile of a battery may be indicative for the remaining usable charge of the battery.

According to an embodiment, data corresponding to the respective time window of driving history of the vehicle may be obtained from an in-vehicle data source. The data source may be any memory, database or the like of the vehicle. In this way, the method can be performed onboard without any communication link to a remote data source.

In an embodiment, the characteristic parameters of the probability distribution may comprise a mean and a standard deviation. The mean (value) and the standard deviation are suitable and/or sufficient to characterize and/or describe the probability distribution. At each time step, e.g. with an update rate in the range of milliseconds, seconds, minutes, etc., the plurality of remaining driving range predictions may form, create, etc. the probability distribution. Then, at each time step, the mean and the standard deviation of this probability distribution may be determined. For example, the mean value µ may be calculated by $μ = \frac{{\sum }_{i = 1}^{n} {AER}_{i}}{n}$*,* wherein AER denotes the remaining driving range prediction, and n denotes the plurality thereof, with n being an integer greater than 1. Further, by way of example, the standard deviation may be calculated by $σ = \sqrt{\frac{{\sum }_{i = 1}^{n} {\left({AER}_{i}-μ\right)}^{2}}{n}}$.

According to an embodiment, the method may be performed in real time with an update rate. For example, the update may be in the range of milliseconds, seconds, minutes, etc. Merely by way of example, the update rate may be 10 s, meaning that every 10 s the plurality of remaining driving range predictions may be determined and the at least one estimated remaining driving range of the vehicle and the corresponding confidence level may be determined.

In an embodiment, at each time step corresponding to the update rate, the plurality of remaining driving range predictions may form at least approximately a normal probability distribution function, and, at each time step, the characteristic parameters of the respective probability distribution function may be determined.

According to an embodiment, the at least one estimated remaining driving range of the vehicle and the corresponding confidence level may be determined based on a known normalized Z-distribution and a table of cumulative probability values. For example, the normalized Z-distribution and the table of cumulative probability values may be made available, e.g. may be stored, in the vehicle, e.g. in an in-vehicle database, memory, or the like. By way of example, the normalized Z-distribution may be expressed and/or calculated by $z = \frac{AER - μ}{σ}$*,* with e.g. mean = 0 and standard deviation = 1. Using the parameters of the remaining driving range probability distribution, the relevant value(s) for the remaining driving range, e.g. AER, and the corresponding confidence level may be extracted using the known normalized Z-distribution and the table of cumulative probability values. The cumulative probability of z is included in the table and represents an area under a standard normal curve. The confidence level of a given remaining driving range level is the complement of this probability value.

In an embodiment, the at least one computational model may be based on and/or may be implemented by at least one of an autoregressive integrated moving average (ARIMA), a recursive neural network (RNN), a long short-term memory (LSTM), a gated recurrent unit (GRU), a transformer network, and a temporal convolutional neural network (TCNN). That is, existing models can be used for carrying out the method. Such model(s) may be updated, e.g. optimized, by data, e.g. vehicle operating data, parameters, weights, etc., collected from the vehicle. For example, such data may be sent to a server, a cloud server, or the like, where the model(s) may be updated based on such data.

According to an embodiment, the at least one estimated remaining driving range of the vehicle and the corresponding confidence level output are used for navigation and/or route planning of the vehicle. In this way, the confidence level may be used for more accurate navigation and/or route planning. For example, based on the estimated remaining driving range and the corresponding confidence level, charging stations for recharging the vehicle's battery may be scheduled accordingly.

In an embodiment the method may further comprise providing recorded driving data of the vehicle to a server for the at least one computational model to be retrained by the server, and receiving the at least one retrained computational model from the server. As mentioned above, the at least one computational model may be updated, e.g. optimized, by data, e.g. vehicle operating data, parameters, weights, etc., collected from the vehicle during its operation. For example, such data may be sent to a server, a cloud server, or the like, where the model(s) may be updated based on such data.

A second aspect provides an apparatus for determining an estimated remaining driving range of an electric vehicle during operation of the vehicle. The apparatus may be configured to carry out the method according to the first aspect. The apparatus comprises processing circuitry. The processing circuitry is configured to determine, by using at least one computational model, a plurality of remaining driving range predictions, each of the plurality of remaining driving range predictions being based on a corresponding time window of driving history of the vehicle- The processing circuitry is further configured to determine characteristic parameters of a probability distribution function formed at least approximately by the plurality of remaining driving range predictions. Further, the processing circuitry is configured to determine at least one estimated remaining driving range of the vehicle and a corresponding confidence level based on the characteristic parameters of the probability distribution function. The processing circuitry is further configured to output the at least one estimated remaining driving range of the vehicle and the corresponding confidence level.

For possible embodiments, variations, etc. of the apparatus reference is made to the first aspect.

The apparatus may be a computer, computing device, or the like, or a part thereof, such as a module, unit, or the like. The processing circuitry may comprise at least one of a CPU, or another general-purpose processor, a digital signal processor (DSP), an ASIC, an FPGA or another programmable logic device, a discrete gate or transistor logic device, a discrete hardware component, or the like. The general-purpose processor may be a microprocessor, any conventional processor, or the like. Alternatively, the processor may be a graphics processing unit (GPU), a neural network processing unit (NPU), a microprocessor, an ASIC, or one or more integrated circuits configured to control program execution according to the methods disclosed herein.

In an embodiment, the apparatus may further comprise at least one interface circuitry. The at least one interface circuitry may be operationally coupled to the processing circuitry. Further, the at least one interface circuitry may be configured to receive data, e.g. the time window of driving history of the vehicle. Further, the at least one interface circuitry may be configured to output the estimated the at least one estimated remaining driving range of the vehicle and the corresponding confidence level, e.g. to an instrument cluster of the vehicle, to a navigation and/or route planning apparatus or system of the vehicle, etc.

According to a third aspect, there is provided a motor vehicle with an apparatus according to the second aspect. The motor vehicle is an electric vehicle which may include passenger automobiles including sports utility vehicles (SUV), buses, trucks, various commercial vehicles, and the like, and includes electric vehicles, such as battery electric vehicles (BEV), plug-in hybrid electric vehicles (PHEV), hydrogen-powered vehicles and other alternative fuel vehicles (e.g., fuels derived from resources other than petroleum).

According to another aspect, there is provided a computer program comprising instructions which, when executed by processing circuitry of a vehicle, cause the processing circuitry to perform the method of the first aspect and/or to implement the functions of the apparatus of the second aspect.

According to another aspect, there is provided a computer-readable medium, comprising instructions which, when executed by processing circuitry of a vehicle, cause the processing circuitry to perform the method of the first aspect and/or to implement the functions of the apparatus of the second aspect.

The invention will be explained in greater detail with reference to exemplary embodiments depicted in the drawings as appended.

### Brief description of the drawings

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically illustrates an apparatus for determining an estimated remaining driving range of an electric vehicle according to an embodiment.
Fig. 2 schematically illustrates an approach for determining an estimated remaining driving range of an electric vehicle according to an embodiment.
Fig. 3 schematically illustrates a concept of using different time windows of driving history for a plurality of remaining driving range predictions according to an embodiment.
Fig. 4 schematically illustrates a concept of determining a plurality of remaining driving range predictions based on different time windows of driving history at each time step, according to an embodiment.
Fig. 5 schematically illustrates in continuation to Fig. 4 a concept of determining probability distribution functions and characteristic features thereof based on a plurality of remaining driving range predictions, according to an embodiment.
Fig. 6 schematically illustrates examples of probability distribution functions according to an embodiment.
Fig. 7 schematically illustrates in a flow chart an exemplary implementation of an approach for determining an estimated remaining driving range of an electric vehicle, according to an embodiment.
Fig. 8 illustrates in a flow chart a method for determining an estimated remaining driving range of an electric vehicle according to an embodiment.
Fig. 9 illustrates a motor vehicle comprising an apparatus according to an embodiment.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### Detailed description of the embodiments

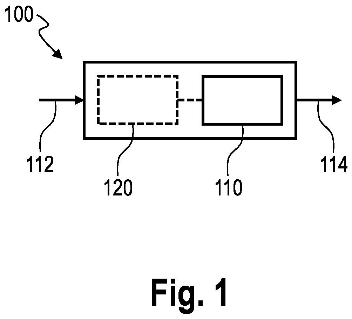

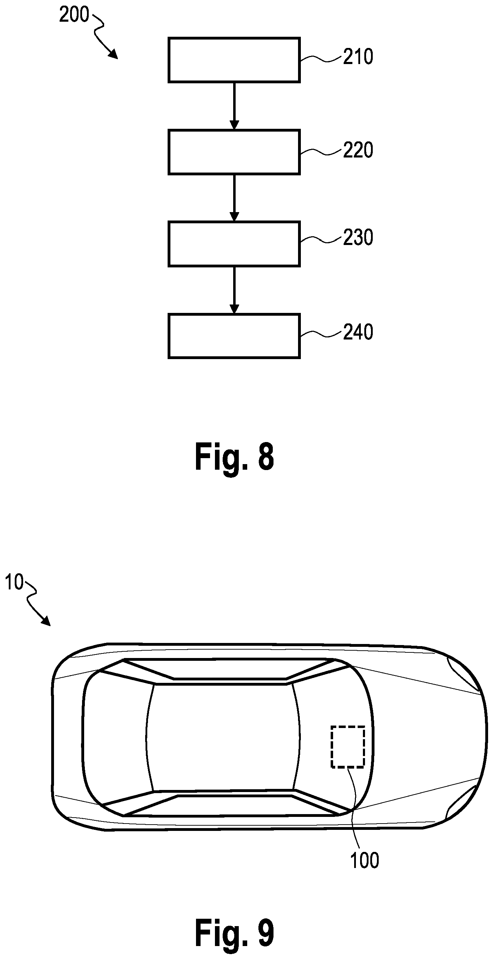

Fig. 1 schematically illustrates an apparatus 100 for determining an estimated remaining driving range of an electric vehicle. The apparatus 100 may be implemented in an electric vehicle or, more generally, in a motor vehicle (see e.g. Fig. 9). The apparatus 100 is configured to determine the estimated remaining driving range during operation of the vehicle.

The apparatus 100 comprises processing circuitry 110. Optionally, the apparatus 100 may further comprise interface circuitry 120, e.g. a data interface or the like, operationally coupled to the processing circuitry 110 and configured to receive data 112 to be processed by the processing circuitry 110 and/or to output data 114 processed by the processing circuitry 110.

The apparatus 100, especially the processing circuitry 110, is configured to determine, by using at least one computational model, a plurality of remaining driving range predictions. The at least one computational model may be executed by the processing circuitry 110. Each of the plurality of remaining driving range predictions is based on a corresponding time window of driving history of the vehicle. This will be explained in more detail further below.

Further, the apparatus 100, especially the processing circuitry 110, is configured to determine characteristic parameters of a probability distribution function formed at least approximately by the plurality of remaining driving range predictions. This will be explained in more detail further below.

In addition, the apparatus 100, especially the processing circuitry 110, is configured to determine at least one estimated remaining driving range of the vehicle and a corresponding confidence level based on the characteristic parameters of the probability distribution function. This will be explained in more detail further below. In this way, the apparatus 100 may provide an informative indication of the estimated remaining driving range of the vehicle together with the corresponding confidence level for this estimation, which may also be referred to as a prediction.

Further, the apparatus 100, especially the processing circuitry 110, is configured to output the at least one estimated remaining driving range of the vehicle and the corresponding confidence level. In Fig. 1, this output of the at least one estimated remaining driving range of the vehicle and the corresponding confidence level is denoted by reference sign 114.

The apparatus 100 may be a computer, computing device, or the like, or a part thereof, such as a module, unit, a vehicle control unit or a part thereof, or the like, provided within the vehicle. The processing circuitry 110 may comprise at least one of a CPU, or another general-purpose processor, a digital signal processor (DSP), an ASIC, an FPGA or another programmable logic device, a discrete gate or transistor logic device, a discrete hardware component, or the like. The general-purpose processor may be a microprocessor, any conventional processor, or the like. Alternatively, the processor may be a graphics processing unit (GPU), a neural network processing unit (NPU), a microprocessor, an ASIC, or one or more integrated circuits configured to control program execution according to the methods disclosed herein.

For example, the at least one computational model may be based on and/or may be implemented by at least one of an autoregressive integrated moving average (ARIMA), a recursive neural network (RNN), a long short-term memory (LSTM), a gated recurrent unit (GRU), a transformer network, and a temporal convolutional neural network (TCNN). That is, existing models can be used for carrying out the method. Such model(s) may be updated, e.g. optimized, by data, e.g. vehicle operating data, parameters, weights, etc., collected from the vehicle. For example, such data may be sent to a server, a cloud server, or the like, where the model(s) may be updated based on such data.

Data corresponding to the respective time window of driving history may be received from an in-vehicle data source, such as database, a memory, or the like. The time window of driving history of the vehicle or the corresponding data may be received by the apparatus 100 and/or the processing circuitry 110, or optionally by the interface circuitry 120, as the above-mentioned input data 112.

For example, the driving history of the vehicle in the respective time window of driving history may be indicative for or may comprise historic vehicle operating data comprising at least one of a driving style of the vehicle, a driving cycle of the vehicle, an environment of the vehicle, and an ageing profile of a battery of the vehicle. These factors may affect the determination, e.g. calculation, of the remaining driving range prediction(s). For example, the driving style may comprise an eco driving style, a normal driving style, and a sporty driving style, or the like. The driving cycle may comprise driving on a highway, in an urban scenario, on country roads, or the like. The environment of the vehicle may comprise weather data and/or weather conditions outside the vehicle, wherein cold and heat may cause extra energy consumption for heating, air conditioning or the like. The ageing profile of a battery may be indicative for the remaining usable charge of the battery. The time window of driving history of the vehicle may be understood as historic operating data of the vehicle in a considered time window, which reaches back into the past from a current point in time and/or a current time step for a certain, respective period of time. For example, the respective time window of driving history may comprise or may cover anything from seconds, minutes, hours, days, months, years, and/or a full driving history of the vehicle. By way of example, the time window of driving history anything from 1 min driving history, to 5 or 10 min, to 1h, 100h, full history etc.

It is noted that the remaining driving range may refer to any indication of the remaining driving range of the vehicle. One, non-limiting example is the so-called all-electric range (AER), which may be understood as the maximum driving range of an electric vehicle using only power from its own on-board battery. For example, the AER may refer to traversing a given driving cycle. For a plug-in hybrid electric vehicle (PHEV), the remaining driving range may mean the maximum driving range in charge-depleting mode. In the example of AER, each of the plurality of remaining driving range predictions may be indicative for or may be an AER prediction, which may be expressed by a corresponding value, which may be referred to as AER value. It is noted that the plurality of remaining driving range predictions may also be expressed as n remaining driving range predictions and, for example, as n AER (value) predictions, with n being an integer greater than 1. In this disclosure, AER may be used synonymously or may be used as a designator for the estimated remaining driving range.

For example, the remaining driving range estimation may be indicated and/or presented, for example, in kilometers (km) or miles (mi). The associated confidence level may be indicated and/or presented, for example, in e.g. percentage (0-100 %). These indications and/or presentations are, however, not limited herein.

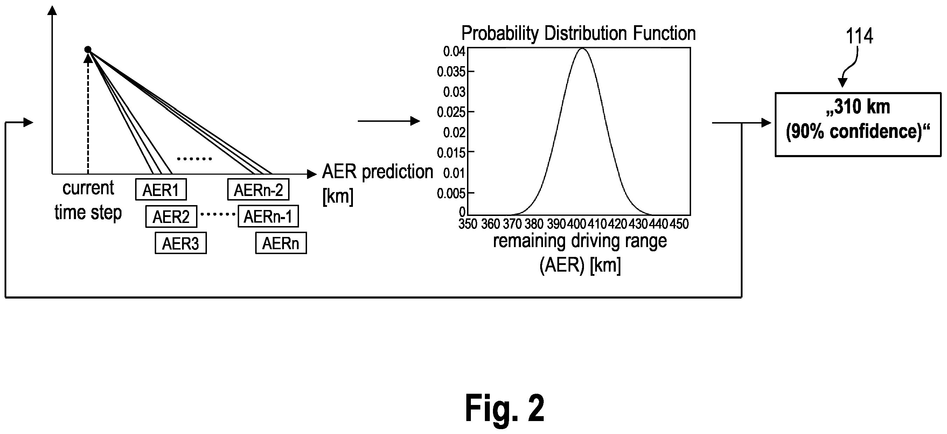

Fig. 2 illustrates an approach for determining the estimated remaining driving range of the vehicle. Fig. 2 is to be read from left to right and illustrates the functions of the apparatus 100 described above and corresponding methods disclosed herein. On the left-hand side of Fig. 2, there is illustrated a diagram in which the horizontal axis denotes the plurality of remaining driving range predictions, here exemplary referred to as AER prediction(s). In the middle of Fig. 2, there is illustrated a diagram with a probability distribution function in which the horizontal axis denotes the remaining driving range in kilometers (km).

As mentioned above, first, by using at least one computational model, there is determined a plurality of remaining driving range predictions, which are only referred to here as AER prediction(s) for the sake of abbreviation and thus better overview in Fig. 2. As mentioned above, the AER prediction may be understood as a designator for the plurality of remaining driving range predictions. There are n AER predictions. Each of the n AER predictions are made at a current time step indicated by an arrow in the diagram on the left-hand side of Fig. 2.

It is noted that each of the n AER predictions, here referred to as AER1, AER2, AER2, AERn-2, AERn-1, and AERn, has its own respective time window of driving history, as will be described in more detail further below.

At each time step, these n AER predictions form at least approximately a probability distribution function, as indicated by the diagram in the middle of Fig. 2. As mentioned above, from this probability distribution function characteristic parameters are determined. Further, as mentioned above, at least one estimated remaining driving range, here exemplary "310 km", of the vehicle and a corresponding confidence level, here exemplary "90% confidence) are determined based on the characteristic parameters of the probability distribution function. As indicated in Fig. 2, the "310 km (90% confidence)" is the output 114 of the apparatus 100, as described above. The output 114 may be displayed and/or presented within the vehicle, as described herein.

In Fig. 2, the arrow pointing back to the left-hand side of Fig. 2 indicates that the aforementioned steps may be performed repeatedly, for example in each defined time step.

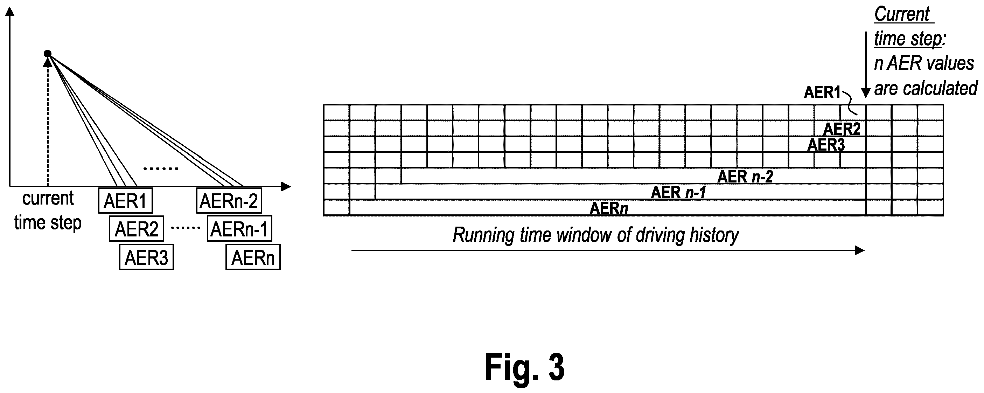

Fig. 3 schematically illustrates a concept of using different time windows of driving history for determining a plurality of remaining driving range predictions. On the left-hand side of Fig. 3, there is illustrated the diagram of the n AER predictions of Fig. 2. On the right-hand side of Fig. 3, there is illustrated a diagram with different time windows of driving history as mentioned above.

As can be seen from the diagram with different time windows of driving history, each of these time windows reaches back into the past from a current point in time and/or a current time step for a certain, respective period of time. For example, the respective time window of driving history may comprise or may cover anything from seconds, minutes, hours, days, months, years, and/or a full driving history of the vehicle. By way of example, the time window of driving history anything from e.g. 1 min driving history, to 5 or 10 min, to 1 h, 100 h, full history, etc.

Accordingly, as exemplary illustrated in the diagram, predicted AER1 may have a first time window of driving history of a certain length of time, AER2 may have a different, second time window of driving history of a certain length of time, AER3 may have a different, third time window of driving history of a certain length of time, etc.

In other words, in the vehicle, the n AER prediction (values) may be generated in real time every xx seconds, e.g. 10s, using their respective time window of driving history of e.g. 1 min, 10 min, etc.

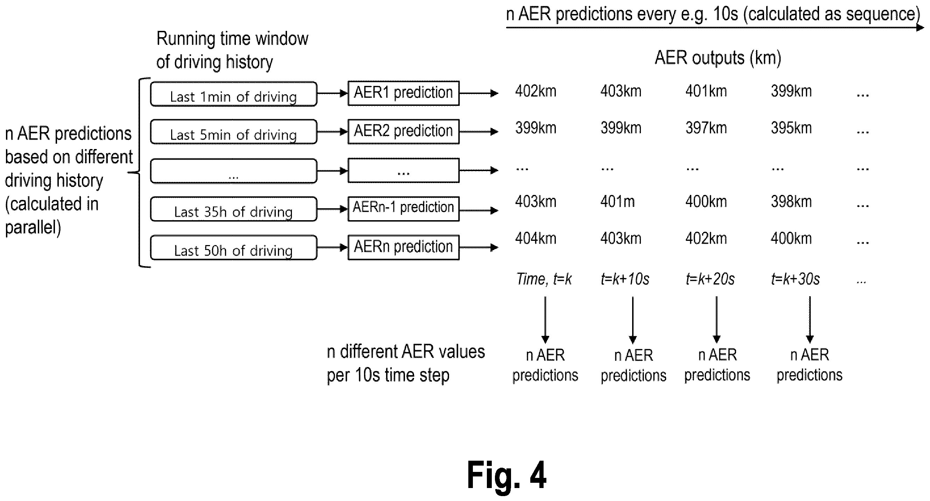

Fig. 4 schematically illustrates a concept of determining a plurality of remaining driving range predictions based on different time windows of driving history at each time step.

As mentioned above, at each time step, the n AER prediction (values) may be generated in real time every xx seconds, e.g. 10s, using their respective time window of driving history of e.g. 1 min, 10 min, etc. These n AER predictions may be determined, e.g. calculated, in parallel.

In the example of Fig. 4, at a first time step, e.g. t=k, the AER1 prediction may result in "402 km" remaining driving range prediction. The AER2 prediction may result in "399 km" remaining driving range prediction. The AERn-1 prediction may result in "403 km" remaining driving range prediction. The AERn prediction may result in "404 km" remaining driving range prediction. As mentioned above, the n AER predictions form at least approximately the above-mentioned probability distribution function for the current time step, i.e. the first time step.

Then, in the next, second time step, e.g. t=k+10 s, the AER1 prediction may result in "403 km" remaining driving range prediction. The AER2 prediction may result in "399 km" remaining driving range prediction. The AERn-1 prediction may result in "401 km" remaining driving range prediction. The AERn prediction may result in "403 km" remaining driving range prediction. Again, the n AER predictions form at least approximately the above-mentioned probability distribution function for the current time step, i.e. the second time step, e.g. t=k+10 s.

As indicated in Fig. 4 by the further time steps t=k+20 s, t=30 s, etc., n different AER prediction(s) (values) are determined per each time step, e.g. every 10 s.

It is noted that the above-mentioned characteristic parameters of the probability distribution function are determined at each time step.

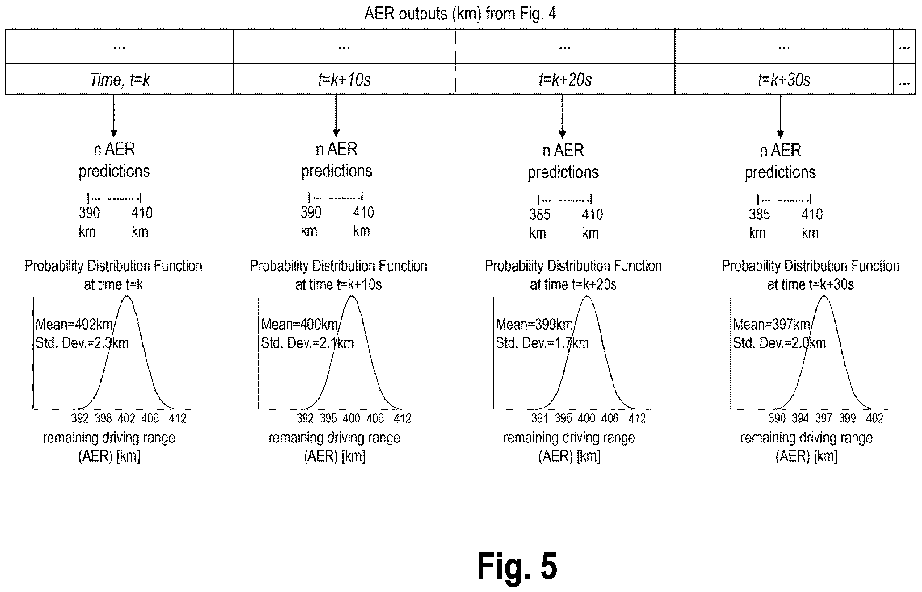

The outputs of the remaining driving range prediction, i.e. the AER outputs, will be further used as explained below with reference to Fig. 5.

Fig. 5 schematically illustrates in continuation to Fig. 4 a concept of determining probability distribution functions and characteristic features thereof based on a plurality of remaining driving range predictions, at each time step.

Above, with reference to Fig. 4, it has been explained that n different AER prediction(s) (values) are determined per each time step, e.g. every 10 s.

Referring now to Fig. 5, at each time step, i.e. t=k, t=k+10s, t=k+20s, t=k+30s, etc., the n different AER prediction(s) (values) determined form at least approximately a respective probability distribution function.

It is noted that it may be assumed that the plurality of remaining driving range predictions, i.e. the n AER values, form at least approximately a probability distribution which is normal, based on the central limit theorem (CLT). In other words, according to the central limit theorem (CLT), the distribution of a normalized version of a sample mean converges to a standard normal distribution. That is, with a sufficiently large number of remaining driving range predictions these may be assumed to form a normal probability distribution. Merely by way of example, the number of remaining driving range predictions, i.e. the n AER predictions, may be greater than 10, 20, 30, etc., where tests have shown that a meaningful and/or realistic range may be in the range of approx. 20 to 100 remaining driving range predictions, or more. For example, the number of remaining driving range predictions determined may be selected depending on e.g. computational capability.

As mentioned above, from the respective probability distribution function characteristic parameters thereof are determined. As indicated in Fig. 5, suitable characteristic parameters, which characterize the probability distribution function well, are the mean and the standard deviation.

Accordingly, the characteristic parameters of the probability distribution may comprise a mean and a standard deviation. The mean (value) and the standard deviation are suitable and/or sufficient to characterize and/or describe the probability distribution. At each time step, e.g. with an update rate in the range of milliseconds, seconds, minutes, etc., the plurality of remaining driving range predictions may form, create, etc. the probability distribution. Then, at each time step, the mean and the standard deviation of this probability distribution may be determined. For example, the mean value µ may be calculated by $μ = \frac{{\sum }_{i = 1}^{n} {AER}_{i}}{n}$*,* wherein AER denotes the remaining driving range prediction, and n denotes the plurality thereof, with n being an integer greater than 1. Further, by way of example, the standard deviation may be calculated by $σ = \sqrt{\frac{{\sum }_{i = 1}^{n} {\left({AER}_{i}-μ\right)}^{2}}{n}}$.

In the example according to Fig. 5, at the first time step t=k, the mean=402 km and the standard deviation=2.3 km. At the second time step t=k+10 s, the mean=400 km and the standard deviation=2.1 km. At the third time step t=k+20 s, the mean=399 km and the standard deviation=1.7 km. At the fourth time step t=k+30 s, the mean=397 km and the standard deviation=2.0 km.

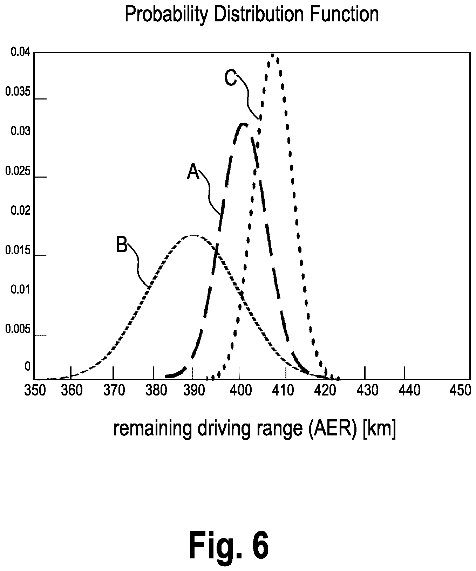

Fig. 6 schematically illustrates examples of probability distribution functions. These are denoted by reference signs A, B and C. Each example is for one point of time, i.e. for one time step, under different variations of factors, such as a. driving style, e.g. eco, normal, sporty, or the like, b. driving cycle, e.g. highway, urban, country roads, or the like, c. environment outside of the vehicle, e.g. cold, hot, or the like, corresponding to extra auxiliary energy usage, and d. ageing profile of the battery, i.e. remaining usable charge.

In example 1, the mean=400 km and the standard deviation from the mean is 5 km (curve A). In example 2, the mean=390 km and the standard deviation from the mean is 10 km (curve B). In example 3, the mean=405 km and the standard deviation from the mean is 4km (curve C).

The lower the variation of the above-mentioned factors, the thinner the shape of the bell curve, i.e. lower variation around the mean value, such as in example 3 (curve C) above. Similarly, the higher the variation of the above-mentioned factors, the wider the shape of the curve, such as in example 2 (curve B) above.

Then, using the characterizing parameters of the (AER) probability distribution function, the relevant value(s) for the estimated remaining driving range, e.g. AER, and the corresponding confidence level can be extracted using the known normalized Z-distribution and table of cumulative probability values. In statistics, a standard normal table, also called the unit normal table or Z table, is a mathematical table for the values of Φ, the cumulative distribution function of the normal distribution. It is used to find the probability that a statistic is observed below, above, or between values on the standard normal distribution, and by extension, any normal distribution. Since probability tables cannot be printed for every normal distribution, as there are an infinite variety of normal distributions, it is common practice to convert a normal to a standard normal (known as a z-score) and then use the standard normal table to find probabilities. The normalized Z-distribution and table of cumulative probability values may be provided onboard in the vehicle and may, for example, be stored in a memory or the like.

The normalized Z-distribution may be expressed as $z = \frac{AER - μ}{σ}$, with mean=0 and std. dev=1. The cumulative probability of z is included in the table and represents the area under the standard normal curve.

The confidence level of a given AER level is the complement of this probability value.

In the following, some examples are used to further explain the determination, e.g. extraction, of the estimated remaining driving range, e.g. AER, and the corresponding confidence level. For each value of z calculated below, the confidence level is equal to: 1 - probability value taken from the standard z-table.

When asking what the confidence level is to be able to drive e.g. 395 km, the confidence level for an estimated remaining driving range, e.g. AER, of 395 km may be extracted. Accordingly, in a first example, µ = 400km, σ = 5km, $z = \frac{395 - 400}{5} =$ -1 (as derived from z-value calculation), and the confidence level = 1 - 0.1587=~ 84% (which value is derived from the stand z-table). In a second example, µ = 390km, σ = 10km;z = $\frac{395 - 390}{10} = 0.5$, and the confidence level = 1 - 0.6915=~ 30%. In third example, µ = 405km, $σ = 4 km \to ⋅ z = \frac{395 - 405}{4} = - 2.5 \to$ Confidence level = 1 - 0.0062=~ 100%.

Further, when asking how far the vehicle can drive with 95 % (target) confidence, the estimated remaining driving range, e.g. AER, with a confidence level of 95 % may be extracted. For a confidence level of 95%, the z value from the table may be equal to -1.64. Accordingly, in a first example, µ = 400km, σ = 5km, the estimated remaining driving range, e.g. AER, at 95% target confidence = 5 * (-1.64) + 400 = ~ 392 km. In a second example, µ = 390km, σ = 10km, the estimated remaining driving range, e.g. AER, at 95% target confidence = 10* (-1.64) + 390 = ~ 374km. In a third example, µ = 405km, σ = 4km , the estimated remaining driving range, e.g. AER, at 95% target confidence = 4* (-1.64) + 405 = - 398 km.

It is noted that when assuming consistent driving, consistent driving environment, and consistent use of the vehicle, e.g. auxiliaries, the most significant factor affecting the estimated remaining driving range, e.g. AER, may be the ageing of the battery pack. That is, assuming such high consistency of the above-mentioned factors, the shape of the probability distribution function is expected to be narrow. Over time, the shape of the probability distribution function may be constant but the mean may shifts to lower estimated remaining drive range, e.g. AER, values due to ageing of the vehicle's battery.

Further, when assuming consistent driving, driving environment changes once, e.g. vehicle sold in a different market with other climate, and consistent use of vehicle, e.g. auxiliaries, apart from the gradual estimated remaining driving range, e.g. AER, degradation due to ageing of the vehicle's battery, there may be an additional one-off change affecting the AER calculation, related to the driving environment. The change of environment is to a more extreme climate, e.g. very cold or very hot, where the estimated remaining driving range, e.g. AER, automatically reduces. The reverse is equally possible. e.g. a right shift for a change to a milder climate. The rate of change over time may also vary with the new climate or environment.

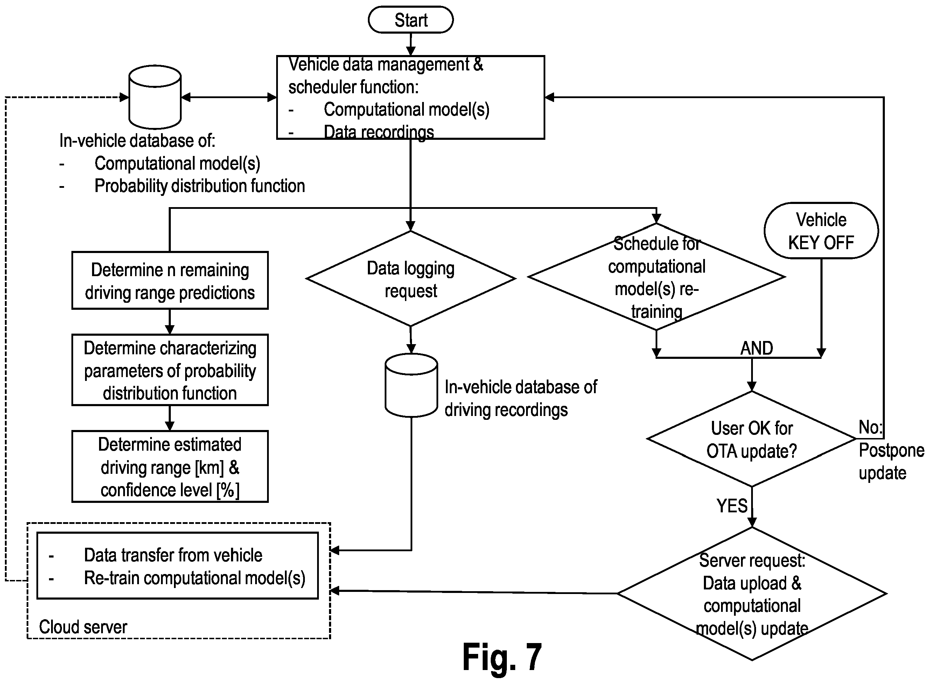

Fig. 7 schematically illustrates in a flow chart an exemplary implementation of an approach for determining an estimated remaining driving range of an electric vehicle. Fig. 7 provides a high level overview.

At vehicle start, the vehicle data management & scheduler function may start the process of determining the above-mentioned plurality of remaining driving range predictions. Further, it may send a request for the driving data to start being logged continuously into an in-vehicle database. If needed, it may send a scheduled request for the at least one computational model to be re-trained on a server, e.g. at 3 months or the like.

At vehicle key off, if there is a pending request to re-train the AER models, the user may be prompted for approval followed by a server request to transfer the pre-recorded data to the server, e.g. from the last 3 months or the like, to re-train the at least one computational model using this data.

Further, the updated, re-trained at least one computational model may be sent back to the vehicle via an OTA transfer, or the like.

Fig. 8 illustrates in a flow chart a method 200 for determining an estimated remaining driving range of an electric vehicle. The method is performed during operation of the vehicle. The method may be implemented by using the apparatus 100 disclosed herein.

The method comprises determining 210, by using at least one computational model, a plurality of remaining driving range predictions, each of the plurality of remaining driving range predictions being based on a corresponding time window of driving history of the vehicle.

The method 200 further comprises determining 220 characteristic parameters of a probability distribution function formed at least approximately by the plurality of remaining driving range predictions.

Further, the method 200 comprises determining 230 at least one estimated remaining driving range of the vehicle and a corresponding confidence level based on the characteristic parameters of the probability distribution function.

The method further comprises outputting 240 the at least one estimated remaining driving range of the vehicle and the corresponding confidence level.

In the foregoing detailed description, various features are grouped together in one or more examples with the purpose of streamlining the disclosure. It is to be understood that the above description is intended to be illustrative, and not restrictive. It is intended to cover all alternatives, modifications and equivalents of the different features and embodiments. Many other examples will be apparent to one skilled in the art upon reviewing the above specification. The embodiments were chosen and described in order to explain the principles of the invention and its practical applications, to thereby enable others skilled in the art to utilize the invention and various embodiments with various modifications as are suited to the particular use contemplated.

### Reference Signs List

- 10: motor vehicle
- 100: apparatus
- 110: processing circuitry
- 112: input (data)
- 114: output (data)
- 120: interface circuitry
- 200: method
- 210-240: method step(s)

## Claims

1. A method (200) for determining an estimated remaining driving range of an electric vehicle, the method being performed during operation of the vehicle, and the method comprising:
determining (210), by using at least one computational model, a plurality of remaining driving range predictions, each of the plurality of remaining driving range predictions being based on a corresponding time window of driving history of the vehicle;
determining (220) characteristic parameters of a probability distribution function formed at least approximately by the plurality of remaining driving range predictions;
determining (230) at least one estimated remaining driving range of the vehicle and a corresponding confidence level based on the characteristic parameters of the probability distribution function; and
outputting (240) the at least one estimated remaining driving range of the vehicle and the corresponding confidence level.

2. The method of claim 1, wherein the time windows of driving history of the plurality of remaining driving range predictions differ from each other in terms of reaching back into the past for a respective period of time from a current time step.

3. The method of claim 1 or 2, wherein the driving history of the vehicle in the respective time window of driving history is indicative for historic vehicle operating data comprising at least one of a driving style of the vehicle, a driving cycle of the vehicle, an environment of the vehicle, and an ageing profile of a battery of the vehicle.

4. The method of any one of the preceding claims, wherein data corresponding to the respective time window of driving history of the vehicle is obtained from an in-vehicle data source.

5. The method of any one of the preceding claims, wherein the characteristic parameters of the probability distribution comprise a mean and a standard deviation.

6. The method of any one of the preceding claims, wherein the method is performed in real time with an update rate.

7. The method of claim 6, wherein, at each time step corresponding to the update rate, the plurality of remaining driving range predictions forms at least approximately a normal probability distribution function, and, at each time step, the characteristic parameters of the respective probability distribution function is determined.

8. The method of any one of the preceding claims, wherein the at least one estimated remaining driving range of the vehicle and the corresponding confidence level are determined based on a known normalized Z-distribution and a table of cumulative probability values.

9. The method of any one of the preceding claims, wherein the at least one computational model is based on at least one of an autoregressive integrated moving average, ARIMA, a recursive neural network, RNN, a long short-term memory, LSTM, a gated recurrent unit, GRU, a transformer network, and a temporal convolutional neural network, TCNN.

10. The method of any one of the preceding claims, wherein the at least one estimated remaining driving range of the vehicle and the corresponding confidence level output are used for navigation and/or route planning of the vehicle.

11. The method of any one of the preceding claims, further comprising providing recorded driving data of the vehicle to a server for the at least one computational model to be retrained by the server, and receiving the at least one retrained computational model from the server.

12. An apparatus (100) for determining an estimated remaining driving range of an electric vehicle during operation of the vehicle, the apparatus comprising: processing circuitry (110) configured to:
determine, by using at least one computational model, a plurality of remaining driving range predictions, each of the plurality of remaining driving range predictions being based on a corresponding time window of driving history of the vehicle;
determine characteristic parameters of a probability distribution function formed at least approximately by the plurality of remaining driving range predictions;
determine at least one estimated remaining driving range of the vehicle and a corresponding confidence level based on the characteristic parameters of the probability distribution function; and
output the at least one estimated remaining driving range of the vehicle and the corresponding confidence level.

13. A motor vehicle (10) comprising an apparatus (100) according to claim 12.

14. A computer program comprising instructions which, when executed by processing circuitry of a vehicle, cause the processing circuitry to perform the method of any one of claims 1 to 11.

15. A computer-readable medium, comprising instructions which, when executed by processing circuitry of a vehicle, cause the processing circuitry to perform the method of any one of claims 1 to 11.
